# EUROPEAN PATENT APPLICATION

(11) **EP 4 647 830 A1**
(43) Date of publication of application: **12.11.2025**
(21) Application number: 25174805.9
(22) Date of filing: 07.05.2025
(51) Int. Cl.: G02B 27/01, F21V 8/00, G02B 6/06, G02B 6/08

(54) **SYSTEM AND METHOD FOR COHERENT IMAGE BUNDLE FIBER IN DISPLAYS**

(30) Priority: 07.05.2024 US 202463643812 P
(71) Applicant: Thales Defense & Security, Inc., Clarksburg, Maryland 20871 (US)
(72) Inventor: POPOOLAPADE, John, BOLINGBROOK, 60440 (US)
(74) Representative: Lavoix

(57) **Abstract**

A display apparatus is provided. The display apparatus includes a waveguide and a collimating optics that are positioned at a first side of the display apparatus and coupled to each other. The display apparatus includes an image source and a collimating optics module arranged at a second side of the display apparatus. The second side of the display apparatus is different from the first side of the display apparatus. The display apparatus includes a coherent fiber bundle (CFB) that is positioned between and coupled to (i) the waveguide and the collimating optics and (ii) the image source and the collimating optics module.

## Description

### INCORPORATION BY REFERENCE

The present application claims the benefit of priority to U.S. Provisional Application No. 63/643,812 filed on May 7, 2024, which is incorporated by reference herein in its entirety.

### TECHNICAL FIELD

The present disclosure describes aspects generally related to a coherent fiber bundle applied in displays.

### BACKGROUND

To achieve a high brightness from an image source, a display and/or light engine of the image source may need to be driven with a high electrical power which, consequently, may require a complicated heat management resulting in a heavy and large display package (or display assembly). It is desired to minimize a frontal thermal signature and a weight of the display assembly and couple a bright image source to an efficient waveguide in the display assembly.

### SUMMARY

Aspects of the disclosure include methods for generating augmented/virtual reality displays based on a coherent fiber bundle and apparatuses for generating augmented or virtual reality displays. In some examples, the apparatus includes a coherent fiber bundle.

In the disclosure, applications of a coherent fiber bundle are provided as a conduit for a remotely located image source and as a microdisplay replacement in head mounted and/or head worn augmented or virtual reality displays.

According to an aspect of the disclosure, a display apparatus is provided. The display apparatus includes a waveguide and a collimating optics that are positioned at a first side of the display apparatus and coupled to each other. The display apparatus includes an image source and a collimating optics module arranged at a second side of the display apparatus. The second side of the display apparatus is different from the first side of the display apparatus. The display apparatus includes a coherent fiber bundle (CFB) that is positioned between and coupled to (i) the waveguide and the collimating optics and (ii) the image source and the collimating optics module.

In an aspect, the first side of the display apparatus is a front side of the display apparatus, and the second side of the display apparatus is a backside of the display apparatus.

In an aspect, the second side of the display apparatus is one of a topside, a left side, and a right side of the display apparatus.

In an aspect, the CFB includes a tapered first end coupled to (i) the waveguide and the collimating optics, and a second end coupled to (ii) the image source and the collimating optics module.

In an aspect, the waveguide and the collimating optics are separate components coupled together.

In an aspect, the waveguide and the collimating optics are integrated into a single component.

In an aspect, the collimating optics module and the image source are separate components coupled together.

In an aspect, the collimating optics module and the image source are integrated into a single component.

In an aspect, the CFB is a dual CFB that includes a first sub-CFB and a second sub-CFB. Each of the first sub-CFB and the second sub-CFB in the dual CFB is coupled to a respective sub-image source of the image source and a respective sub-waveguide of the waveguide.

In an aspect, the CFB is rigid, flexible, flat, formed, or a combination thereof.

In an aspect, the image source is a digital light processing (DLP) projector.

In an aspect, the CFB includes a plurality of fibers, and a fiber size of each of the plurality of fibers in the CFB is less than 10 micrometers.

In an aspect, the CFB includes a plurality of fibers, and a fiber size of each of the plurality of fibers in the CFB is one of 4 micrometers and 1 micrometer.

According to another aspect of the disclosure, a method of operating a display apparatus is provided. In the method, light rays of an initial image are generated via an image source of the display apparatus. The light rays emitting from each pixel of the image source are received and collimated into parallel rays via a collimating optics module of the display apparatus. The collimating optics module is coupled to the image source. The collimated light rays are received and transmitted toward a collimating optics via a coherent fiber bundle (CFB) of the display apparatus. The CFB is arranged between the collimating optics module and the collimating optics, and electrically coupled to the collimating optics module and the collimating optics. The collimated light rays are received and transmitted into a waveguide via the collimating optics. The collimating optics is coupled to the waveguide. The collimated light rays are transmitted toward an eyepiece optics to display an image via the eyepiece optics based on the collimated light rays.

In an aspect, the waveguide and the collimating optics are positioned at a first side of the display apparatus, and the image source and the collimating optics module are arranged at a second side of the display apparatus that is different from the first side of the display apparatus.

In an aspect, the first side of the display apparatus is a front side of the display apparatus, and the second side of the display apparatus is a backside of the display apparatus.

In an aspect, the second side of the display apparatus is one of a topside, a left side, and a right side of the display apparatus.

In an aspect, the CFB includes a tapered first end coupled to (i) the waveguide and the collimating optics, and a second end coupled to (ii) the image source and the collimating optics module.

In an aspect, the CFB includes a plurality of fibers, and a fiber size of each of the plurality of fibers in the CFB is less than 10 micrometers.

In an aspect, the CFB includes a plurality of fibers, and a fiber size of each of the plurality of fibers in the CFB is one of 4 micrometers and 1 micrometer.

### BRIEF DESCRIPTION OF THE DRAWINGS

Further features, the nature, and various advantages of the disclosed subject matter will be more apparent from the following detailed description and the accompanying drawings in which:
FIG. 1 is a schematic illustration of an example of a display system (100) in accordance with aspects of the present disclosure;
FIG. 2 is a schematic illustration of an example of a coherent fiber bundle fiber (CFB) in a display system (200) in accordance with aspects of the present disclosure;
FIG. 3 shows examples of a waveguide in a display system in accordance with aspects of the present disclosure;
FIG. 4 is an example of specifications of a CFB in accordance with aspects of the present disclosure;
FIG. 5 shows a flow chart outlining a process according to some aspects of the disclosure;
FIG. 6 presents an example system diagram of various hardware components and other features, for use in accordance with aspects of the present disclosure; and
FIG. 7 is a block diagram illustrating various example system components for use in accordance with aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

In a related example, a design configuration of head mounted/head worn augmented/virtual reality displays may require a waveguide and an image source to be co-located in a same housing (or container) mounted in a front of an apparatus, such as a head mounted/head worn apparatus or a head-mounted display (HMD). Due to a low efficiency of existing waveguide technologies, a very bright image source may be required to be coupled with the waveguide to produce a sunlight readable display for most applications, such as military applications.

Display configurations of the related example may not be capable of providing a sufficient solution to these issues. In an example of the display configurations, two-dimensional (2D) expansion waveguides, like diffractive waveguides, are driven with a high brightness image source, such as a digital light processing (DLP). However, the example of the display configurations in the related example is still short of achieving a high luminance due to a low coupling efficiency of the waveguide.

In another example of the display configurations, a more efficient one-dimensional (1D) expansion waveguide is driven by large format displays, such as a liquid crystal on silicon (LCOS) or an organic light-emitting diode (OLED). The other example of the display configurations lacks a sufficient brightness throughput and requires a high drive current to achieve an acceptable brightness level, which subsequently requires a complex thermal and electromagnetic interference radiation (EMI) management. The complex thermal and EMI management increases a frontal weight of the HMD and requires adding counterweight to the head worn apparatus (e.g., HMD).

Thus, a high brightness display is needed for the HMD, such as a virtual reality HMD, an augmented reality HMD, a mixed reality HMD, an optical HMD, a ground HMD, a tethered HMD, a mobile HMD, and a standalone HMD. In an example, the high brightness display is needed for a fixed wing, a rotary wing, and ground HMD platforms. None of the related examples is able to combine a bright enough light source with a sufficiently efficient waveguide to produce a high brightness display. Aspects of the disclosure provide an optical fiber approach that is able to connect required pieces (e.g., the waveguide, the collimating optics, and the image source), and generate a high brightness display.

In an aspect of the disclosure, the image source may be moved (or relocated) away from the waveguide and collimating optics of the head mounted/head worn apparatus to a remote (or different) location, for example, to a back of the helmet mounted/head worn apparatus. Accordingly, the waveguide may be allowed to be driven with an adequate image source power to produce sufficiently bright images. Such a configuration may allow a better weight distribution and an improved center of gravity.

In an aspect of the disclosure, a coherent fiber bundle (CFB) may be used to couple the remote (or allocated) image source to the waveguide and collimating optics in the front of the head mounted/head worn apparatus. The CFB may be a type of imaging fiber that has a spatial correlation between an input fiber and an output fiber. In an example, the CFB may be apply a same technology used in medical endoscopes.

In an aspect of the disclosure, the CFB may be tapered at a side of the waveguide to form a same size and/or a same form factor as an intentionally designed microdisplay that is placed at a designed image plane of collimating lens of the waveguide. Such a configuration may have zero frontal thermal signature, and may be efficient and easy to manage a thermal and/or an electromagnetic radiation footprint at the remote (or different) location. In an example, by inserting the tapered end of the CFB into the waveguide, a small and bright projector is coupled to a one-dimensional (1D) waveguide to achieve an efficient and high luminance display.

In an aspect of the disclosure, the CFB may also lend itself to (or be applied to) a binocular/biocular display implementation by using (i) a single bifurcated CFB from the image source to the waveguide or (ii) a dual CFB from image sources to waveguides, where each of sub-CFBs in the dual CFB is coupled to a respective image source and respective waveguide.

In an example, the CFB is a type of fiber optic assembly designed to transmit a light while preserving a spatial coherence of the light. Unlike regular fiber optic bundles used for illumination purposes, which may scramble (or disturb) a spatial arrangement of light rays, the CFB aims to maintain relative positions and phases of an incoming light waves as the light waves travel through the bundle.

In an example, the CFB includes a plurality of individual optical fibers tightly packed together in a specific geometric pattern. These fibers may be made of various materials (e.g., glass or plastic) that are chosen for light transmission properties and abilities to maintain the spatial coherence.

The present disclosure includes (1) an aspect to place the image source/light engine remotely from the waveguide on a tactical, mounted and/or dismounted HMD, such as soldiers HMDs, to enable driving the image source to a higher level to achieve a high display luminance; (2) an aspect to provide a better head borne weight distribution; and (3) an aspect to efficiently manage heat and electromagnetic interference radiation (EMI) radiation signatures.

Aspects of the disclosure allow coupling a bright, small exit pupil image source (e.g., DLP) to a 1D expansion waveguide through a CFB to achieve an efficient and high luminance display. Aspects of the disclosure also allow coupling any large format and bright image sources remotely to a two-dimensional (2D) expansion waveguide through the CFB with adequate collimating optics to achieve a higher display luminance than any currently available display configuration in the market today.

By decoupling the image source from the waveguide and collimating optics and placing the image source remotely on the head worn apparatus (e.g., HMD), the frontal package of the head worn apparatus is smaller, lighter, brighter, and cooler. A heat or electromagnetic signature is reduced or eliminated. The remotely placed image source is coupled to the waveguide and collimating optics using the CFB. The enclosure (or container) of the remotely image source may be effectively designed to mitigate a heat dissipation and an EMI radiation, and also serve as a counterweight for a better headborne weight distribution.

In another aspect, an image transmitted to an image plane at a CFB end of the waveguide is agnostic (or irrelevant) of the waveguide technology if a form factor of the image matches an expected form factor of the image source for the waveguide.

Accordingly, in one or more aspects, the functions described below may be implemented in any one of a HMD, or a Head-Worn Display ("HWD"). Further, these terms may also be used interchangeably with the phrase "video display for a user/pilot."

Several aspects will now be presented with reference to various apparatuses and methods. These apparatuses and methods will be described in the following detailed description and illustrated in the accompanying drawings by various blocks, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to include instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), compact disk ROM (CD-ROM) or other optical disk storage, magnetic disk storage or other magnetic storage devices, or any other medium that can be used to carry or store desired program code in the form of instructions or data structures and that can be accessed by a computer. Disk and disc, as used herein, includes CD, laser disc, optical disc, digital versatile disc (DVD), and floppy disk where disks usually reproduce data magnetically, while discs reproduce data optically with lasers. Combinations of the above are also included within the scope of computer-readable media.

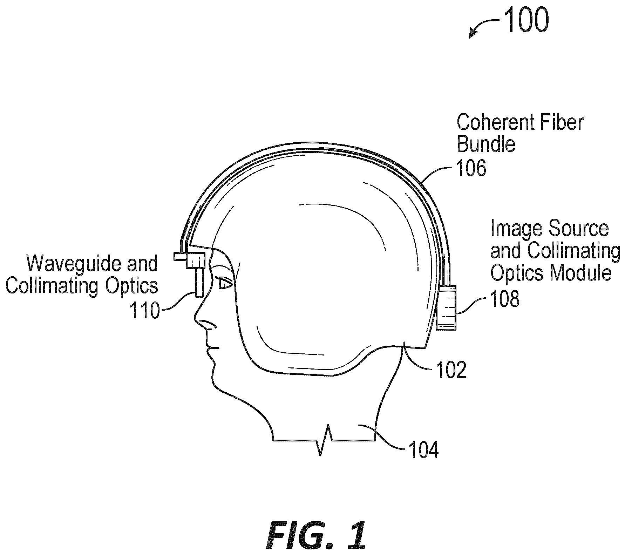

FIG. 1 is a schematic illustration of an example of a display system (100). As shown in FIG. 1, the display system (100) may be an HMD. The display system (100) may include a cover (or head worn apparatus) (102), such as a helmet or a headworn cover, that is covered on a head of a user (104), such as a soldier. The display system (100) includes a waveguide and a collimating optics (110) that are positioned at a first place, such as a front side, of the cover (102). In an example, the waveguide and the collimating optics are separate components coupled together. In an example, the waveguide and the collimating optics are integrated into a single component. The display system (100) includes an image source and a collimating optics module (108) arranged at a second place different from the first place (e.g., front side) of the cover (102). In an example, the image source and the collimating optics module (108) are positioned at a backside of the cover (102). In an example, the collimating optics module and the image source (108) are separate components coupled together. In an example, the collimating optics module and the image source (108) are integrated into a single component. It is noted that FIG. 1 is merely an example, the image source and the collimating optics module (108) may be arranged at other places of the cover (102), such as at a topside, a left side, a right side of the cover. The display system (100) further includes a coherent fiber bundle (106) that is coupled to (i) the waveguide and the collimating optics (110) and (ii) the image source and the collimating optics module (108). The coherent fiber bundle (106) may have multiple fibers that convey light from pixels to a display surface. The coherent fiber bundle may be rigid, flexible, flat, formed, or combination thereof. The coherent fiber bundle (106) is coherent in that images created by display pixels of the image source are not scrambled or otherwise disturbed when passing through the coherent fiber bundle (106). The waveguide and collimating optics (110) may therefore present satisfactory images. When design or manufacturing constraints of the CFB, such as a length and/or a size, cause images to be distorted or scrambled, software algorithm may be applied to the image for correction.

In a head-mounted display (HMD), such as the display system (100), the waveguide and collimating optics (110) may work together to present virtual images to the user (104) in a compact and see-through form, especially in augmented reality (AR) applications. In an example, the waveguide is configured to provide light guiding. For example, the waveguide may efficiently guide light from the image source (e.g., a micro-display) to the user's eye. The waveguide may act like a miniature optical fiber or a light pipe. The waveguide may be configured to provide pupil expansion. For example, the waveguides may incorporate structures (e.g., diffraction gratings, holographic optical elements, or reflective surfaces) to expand an exit pupil of a display, which may create a larger viewing area or "eyebox," allowing the user to see the image clearly even if the eyes of the user move slightly. In an example, the waveguide may be designed to be partially transparent. The waveguide may reflect the light from the image source towards the eye of the user while simultaneously allowing light from the real world to pass through. Thus, the virtual imagery is combined with the surrounding view of the user. In an example, the waveguide is configured to provide image relay such that the waveguide relays the image from the image source to a position in front of the user's eye.

The collimating optics (or the collimating optics module) shown in FIG. 1 may be configured to create virtual images at infinity. For example, the collimating optics (or collimating optics module), which may include a lens or a system of lenses, may be placed between the image source (e.g., micro-display) and the waveguide (or directly in front of the micro-display in some designs). A main function of the collimating optics (or collimating optics module) is to take light rays emanating from each pixel of the image source (e.g., micro-display) and make the light rays parallel. The collimating optics (or collimating optics module) is configured to provide relaxed eye accommodation. For example, when light rays are parallel, the human eye perceives the image as being focused at a far distance (e.g., infinity). This is important for comfortable viewing, as it reduces the strain on the eye's focusing mechanism, especially when viewing virtual objects overlaid on the real world at varying distances. The collimating optics (or collimating optics module) may provide magnification. For example, the collimating optics (or collimating optics module) may provide some level of magnification to make a small image from the micro-display appear larger to the user. The collimating optics (or collimating optics module) may provide aberration correction. For example, the collimating optics (or collimating optics module) may be designed to minimize optical aberrations (e.g., distortion, chromatic aberration, etc.) to ensure a clear and high-quality virtual image.

The image source may be configured to generate the visual content that the user ultimately sees. It is the miniature display that produces the pixels of the virtual or augmented reality experience. In an aspect, the image source is configured to generate pixels. For example, a fundamental function of the image source is to create the individual picture elements (pixels) that form the image. This involves controlling the color and brightness of each tiny dot on the display panel. In an aspect, the image source is configured to display virtual content. For example, in virtual reality (VR) HMDs, the image source renders fully immersive, computer-generated environments that replace the user's view of the real world. In an aspect, the image source is configured to overlay augmented content. For example, in augmented reality (AR) HMDs, the image source may generate digital information, graphics, and virtual objects that are overlaid onto the user's view of the real world. In an aspect, the image source may present 2D and 3D images. For example, depending on the HMD and the content being displayed, the image source can present flat 2D images or, through stereoscopic rendering (displaying slightly different perspectives to each eye), create the illusion of depth and 3D. In an aspect, the image source may determine brightness and color. For example, the image source may determine the brightness, contrast, and color gamut of the displayed visuals, significantly impacting the visual fidelity and user experience. In an aspect, the image source may deliver high resolution and refresh rates. For example, the image source may provide high resolution (e.g., number of pixels) for sharp and detailed visuals and high refresh rates (e.g., how many times the image is updated per second) for smooth and responsive experiences, reducing motion blur and flicker. In an aspect, the image source may include an organic light-emitting diode (OLED), a liquid crystal display (LCD), a Micro-LED, a liquid crystal on silicon (LCoS), a LCD micro-display, a digital light processing (DLP) projector, or the like.

The CFB (106) may be an assembly of a plurality of optical fibers arranged in a precise geometric pattern so that a spatial relationship between the fibers at one end is preserved at the other end. This allows the bundle to transmit images or spatially resolved optical signals from one location to another while maintaining the integrity of the image or pattern. In an aspect, the CFB may include hundreds to thousands of individual optical fibers, each acting as a tiny light conduit. The fibers are usually arranged in a close-packed, such as hexagonal, pattern. In an aspect, each fiber of the CFB may occupy the same relative position at both ends of the bundle. This spatial ordering (or spatial coherence) may ensure that light entering a particular fiber at one end exits from the corresponding position at the other end, preserving the image structure. When an image or pattern of light is projected onto one end of the bundle, each fiber transmits the light it receives to the other end. Since the fibers maintain their relative positions, the overall image is preserved, though at a resolution limited by the number and size of the fibers.

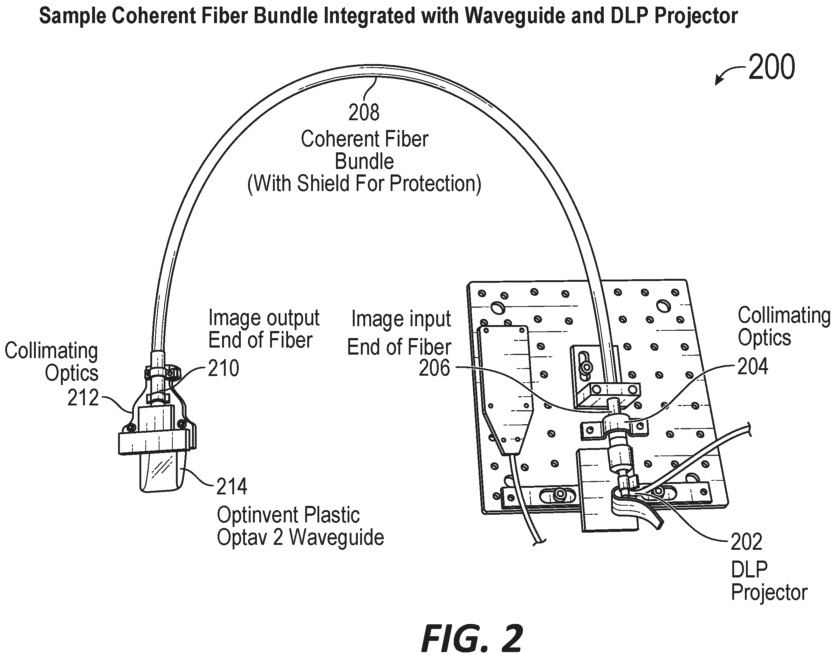

FIG. 2 is a schematic illustration of an example of a coherent fiber bundle (CFB) (208) in a display system (200). As shown in FIG. 2, the CFB (208) includes an output end (210), such as an image output end, coupled to a collimating optics (212) and/or a waveguide (214). The waveguide (214) may include any suitable waveguides. In an example, the waveguide (214) is a Optinvent Plastic Optav 2 waveguide. The CFB (208) further includes an input end (206), such as an image input end, coupled to a collimating optics (or collimating optics module) (204) and/or an image source (202). In an example, the image source (202) is a digital light processing (DLP) projector. The DLP projector is a type of video projector that uses a digital micromirror device (DLP) chip to create a projected image. The DLP chip may contain millions of tiny mirrors, each corresponding to a single pixel. In an example, the CFB may be tapered at a side of the waveguide, such as at the image output end (210), to form a same size and/or a same form factor as a custom-designed micro-display. In an example, the CFB may also be tapered at the input end to accommodate a format of the image source. The form of the CFB from the input end to the output end may be flexible, rigid, flat, formed, or combination thereof, to conform to the head worn apparatus.

In an example of FIG.2, the image source (e.g., DLP projector) (202) may generate the virtual image. Light from the image source passes through the collimating optics module (204). The collimating optics module (204) may convert the diverging light from the image source (202) into parallel (collimated) rays, which is crucial for efficient transmission and minimizing image distortion over distance. The collimated light enters the coherent fiber bundle (208) through the input end (206). The CFB (208) may include thousands of optical fibers arranged so that their spatial relationship is preserved from input to output. This allows the image to be transmitted flexibly over a distance or around bends while maintaining the integrity of the spatial information. At the output end (210) of the CFB (208), the collimating optics (212) may collect the light emerging from the fiber bundle and re-collimates it. This step ensures the image remains sharp and properly oriented for the next optical stage. The collimated image is then coupled into the waveguide (214) that guides light using total internal reflection. The waveguide can include structures such as gratings or holographic elements to direct and expand the light path, allowing for a thin, lightweight form factor and enabling the image to be projected across a larger area or field of view. Finally, the light exits the waveguide (214) and passes through an eyepiece optics (not shown). The eyepiece optics may focus the image and presents it to the user's eye, often magnifying the image and ensuring it appears at a comfortable virtual distance. The eyepiece optics may overlay the image generated by the image source (202) with the real-world view if used in augmented reality applications. In an aspect of the disclosure, the eyepiece optics may include one of a magnifying lens, a field flattening lens, a Fresnel lens, an aspheric lens, or the like.

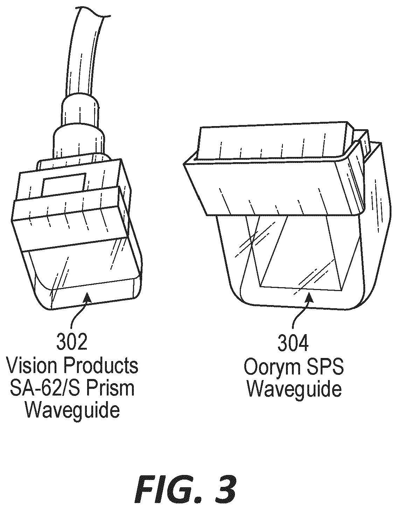

FIG. 3 shows examples of a waveguide in a display system. As shown in FIG. 3, the waveguide may be a vision products SA-62/S prism waveguide (302) or a Oorym SPS waveguide (304). It is noted that FIG. 3 is merely an example. The waveguide may include any other suitable waveguides.

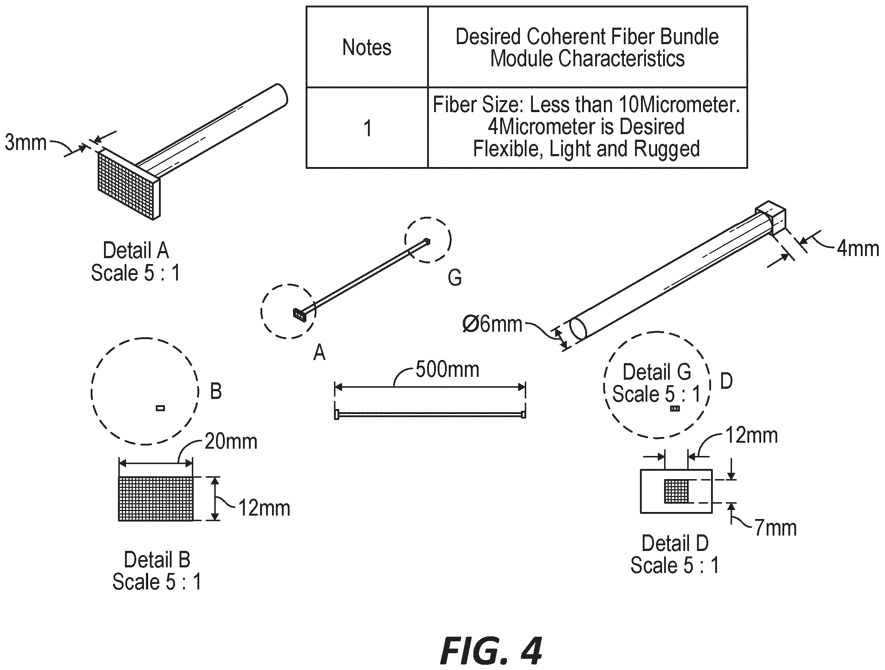

FIG. 4 is an example of specifications of a CFB (400), such as a large format CFB. As shown in FIG. 4, characteristics, such as dimensions, shapes, and materials of the CFB are provided. In an example, a fiber size (or pixel size) of the CFB (400) is less than 10 micrometers. In an example, the fiber size (or pixel size) is 4 micrometers. In an example, a fiber size (or pixel size) of 1 micrometer is desirable.

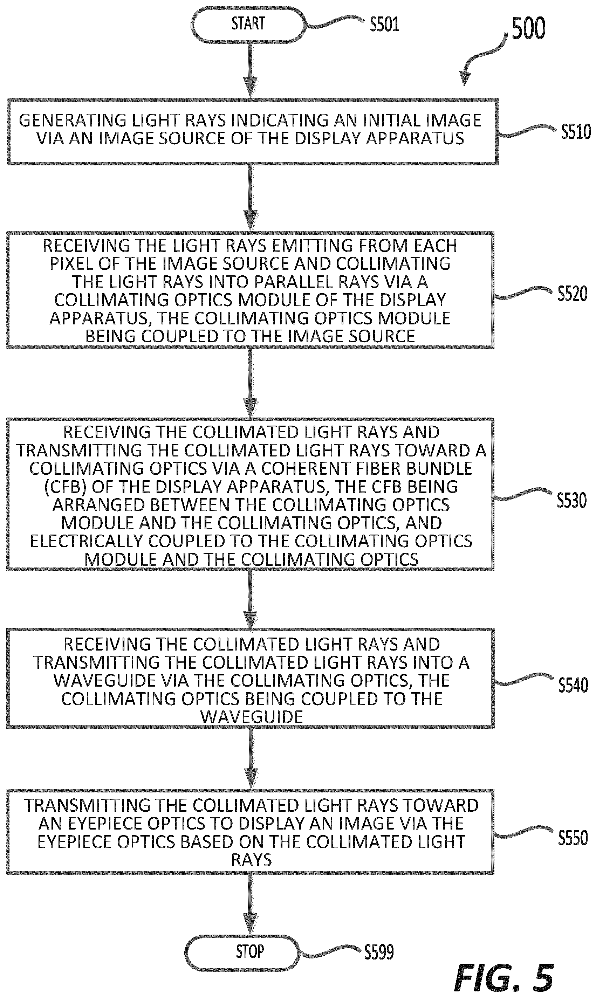

FIG. 5 shows a flow chart outlining a process (500) to operate a display apparatus according to an aspect of the disclosure. In some aspects, the process (500) is implemented in software instructions, thus when the processing circuitry executes the software instructions, the processing circuitry performs the process (500). The process starts at (S501) and proceeds to (S510).

At (S510), light rays indicating an initial image are generated via an image source of the display apparatus.

At (S520), the light rays emitting from each pixel of the image source are received and collimated into parallel rays via a collimating optics module of the display apparatus. The collimating optics module is coupled to the image source.

At (S530), the collimated light rays are received and transmitted toward a collimating optics via a coherent fiber bundle (CFB) of the display apparatus. The CFB is arranged between the collimating optics module and the collimating optics, and electrically coupled to the collimating optics module and the collimating optics.

At (S540), the collimated light rays are received and transmitted into a waveguide via the collimating optics. The collimating optics is coupled to the waveguide.

At (S550), the collimated light rays are transmitted toward an eyepiece optics to display an image via the eyepiece optics based on the collimated light rays.

In an aspect, the waveguide and the collimating optics are positioned at a first side of the display apparatus, and the image source and the collimating optics module are arranged at a second side of the display apparatus that is different from the first side of the display apparatus.

In an aspect, the first side of the display apparatus is a front side of the display apparatus, and the second side of the display apparatus is a backside of the display apparatus.

In an aspect, the second side of the display apparatus is one of a topside, a left side, and a right side of the display apparatus.

In an aspect, the CFB includes a tapered first end coupled to (i) the waveguide and the collimating optics, and a second end coupled to (ii) the image source and the collimating optics module.

In an aspect, the CFB includes a plurality of fibers, and a fiber size of each of the plurality of fibers in the CFB is less than 10 micrometers.

In an aspect, the CFB includes a plurality of fibers, and a fiber size of each of the plurality of fibers in the CFB is one of 4 micrometers and 1 micrometer.

Then, the process proceeds to (S599) and terminates.

The process (500) can be suitably adapted. Step(s) in the process (500) can be modified and/or omitted. Additional step(s) can be added. Any suitable order of implementation can be used.

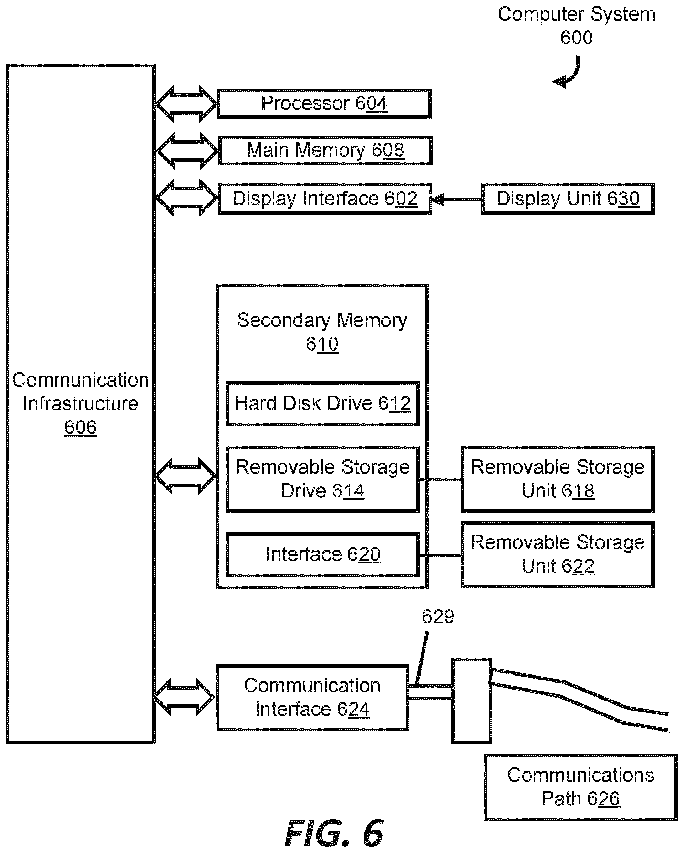

The techniques described above, can be implemented as computer software using computer-readable instructions and physically stored in one or more computer-readable media. For example, FIG. 6 shows a computer system (600) suitable for implementing certain aspects of the disclosed subject matter.

FIG. 6 presents an example of the computer system (600) that includes various hardware components and other features, for use in accordance with aspects presented herein. The aspects may be implemented using hardware, software, or a combination thereof and may be implemented in one or more computer systems or other processing systems. In one example, the aspects may include one or more computer systems capable of carrying out the functionality described herein, e.g., in connection with one or more of the IMUs, displays, INS, HMD, and/or related processing within other components in the helmet of FIGS. 1-4. An example of such a computer system (600) is shown in FIG. 6.

The computer system (600) includes one or more processors, such as processor (604). The processor (604) may correspond to the IMUs described in connection with the auto-alignment of displays system (100). The processor (604) is connected to a communication infrastructure (606) (e.g., a communications bus, cross-over bar, or network). Various software aspects are described in terms of this example computer system. After reading this description, it will become apparent to a person skilled in the relevant art(s) how to implement the aspects presented herein using other computer systems and/or architectures.

Computer system (600) can include a display interface (602) that forwards graphics, text, and other data from the communication infrastructure (606) (or from a frame buffer not shown) for display on a display unit (630). Computer system (600) also includes a main memory (608), preferably random-access memory (RAM), and may also include a secondary memory (610). The secondary memory (610) may include, for example, a hard disk drive (612) and/or a removable storage drive (614), representing a floppy disk drive, a magnetic tape drive, an optical disk drive, etc. The removable storage drive (614) reads from and/or writes to a removable storage unit (618) in a well-known manner. Removable storage unit (618), represents a floppy disk, magnetic tape, optical disk, etc., which is read by and written to removable storage drive (614). As will be appreciated, the removable storage unit (618) includes a computer usable storage medium having stored therein computer software and/or data.

In alternative aspects, secondary memory (610) may include other similar devices for allowing computer programs or other instructions to be loaded into computer system (600). Such devices may include, for example, a removable storage unit (622) and an interface (620). Examples of such may include a program cartridge and cartridge interface (such as that found in video game devices), a removable memory chip (such as an erasable programmable read only memory (EPROM), or programmable read only memory (PROM)) and associated socket, and other removable storage units (622) and interfaces (620), which allow software and data to be transferred from the removable storage unit (622) to computer system (600).

Computer system (600) may also include a communications interface (624). Communications interface (624) allows software and data to be transferred between computer system (600) and external devices. Examples of communications interface (624) may include a modem, a network interface (such as an Ethernet card), a communications port, a Personal Computer Memory Card International Association (PCMCIA) slot and card, etc. Software and data transferred via communications interface (624) are in the form of signals (628), which may be electronic, electromagnetic, optical or other signals capable of being received by communications interface (624). These signals (629) are provided to communications interface (624) via a communications path (e.g., channel) (626). This path (626) carries signals (629) and may be implemented using wire or cable, fiber optics, a telephone line, a cellular link, a radio frequency (RF) link and/or other communications channels. In this document, the terms "computer program medium" and "computer usable medium" are used to refer generally to media such as a removable storage drive (614), a hard disk installed in hard disk drive (612), and signals (629). These computer program products provide software to the computer system (600). Aspects presented herein may include such computer program products.

Computer programs (also referred to as computer control logic) are stored in main memory (608) and/or secondary memory (610). Computer programs may also be received via communications interface (624). Such computer programs, when executed, enable the computer system (600) to perform the features presented herein, as discussed herein. In particular, the computer programs, when executed, enable the processor (604) to perform the features presented herein. Accordingly, such computer programs represent controllers of the computer system (600).

In aspects implemented using software, the software may be stored in a computer program product and loaded into computer system (600) using removable storage drive (614), hard drive (612), or interface (620) to removable storage unit (622). The control logic (software), when executed by the processor (604), causes the processor (604) to perform the functions as described herein. In another example, aspects may be implemented primarily in hardware using, for example, hardware components, such as application specific integrated circuits (ASICs). Implementation of the hardware state machine so as to perform the functions described herein will be apparent to persons skilled in the relevant art(s).

In yet another example, aspects presented herein may be implemented using a combination of both hardware and software.

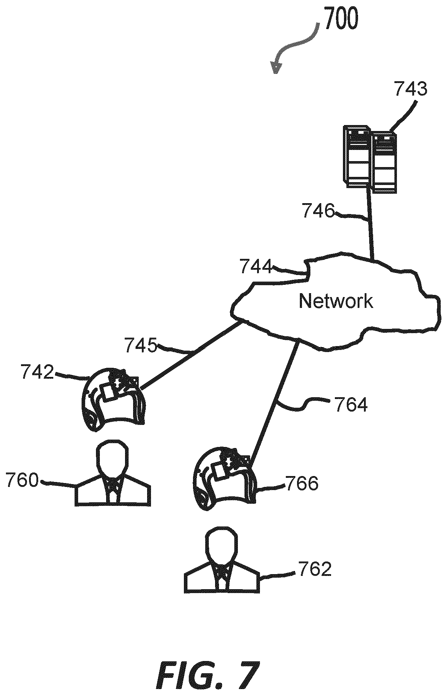

FIG. 7 illustrates a block diagram of a system (700). The system (700) may include various example system components that may be used to operate a display system, such as the display system (100), in accordance with aspects of the present disclosure. The system (700) may include one or more accessors (760), (762) (also referred to interchangeably herein as one or more "users," such as a pilot) and one or more terminals (742), (766) (such terminals may be or include, for example, various features of the IMUs, displays, INS, HMD, and/or related processing within other components in the helmet of FIGs. 1-4) within an overall aircraft or other vehicle network. In one aspect, data for use in accordance with aspects of the present disclosure is, for example, input and/or accessed by accessors (760), (762) via terminals (742), (766), coupled to a server (743), such as the symbols, IMUs, displays, INS, and/or related processing within other components in the helmet of FIGs. 1-4, and/or other device having a processor and a repository for data and/or connection to a repository for data, via, for example, a network (744), such as the Internet, an intranet, and/or an aircraft communication system, and couplings (745), (746), (764). The couplings (745), (746), (764) include, for example, wired, wireless, or fiber optic links. In another example variation, the method and system in accordance with aspects of the present disclosure operate in a stand-alone environment, such as on a single terminal.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to include instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example variations, the functions described above may be implemented in hardware, software, firmware, or any combination thereof. If implemented in software, the functions may be stored on or encoded as one or more instructions or code on a computer-readable medium or media. Computer-readable media includes computer storage media. Storage media may be any available media that is able to be accessed by a computer. By way of example, and not limitation, such computer-readable media can comprise a random-access memory (RAM), a read-only memory (ROM), an electrically erasable programmable ROM (EEPROM), compact disk ROM (CD-ROM) or other optical disk storage, magnetic disk storage or other magnetic storage devices, or any other medium that may be used to carry or store desired program code in the form of instructions or data structures and that may be accessed by a computer. Disk and disc, as used herein, includes CD, laser disc, optical disc, digital versatile disc (DVD), and floppy disk, where disks usually reproduce data magnetically, while discs reproduce data optically with lasers. Combinations of the above should also be included within the scope of computer-readable media.

While the aspects described herein have been described in conjunction with the example aspects outlined above, various alternatives, modifications, variations, improvements, and/or substantial equivalents, whether known or that are or may be presently unforeseen, may become apparent to those having at least ordinary skill in the art. Accordingly, the example aspects, as set forth above, are intended to be illustrative, not limiting. Various changes may be made without departing from the spirit and scope of the disclosure. Therefore, the disclosure is intended to embrace all known or later-developed alternatives, modifications, variations, improvements, and/or substantial equivalents.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous disclosure is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof" include any combination of A, B, and/or C, and may include multiples of A, multiples of B, or multiples of C. Specifically, combinations such as "at least one of A, B, or C," "at least one of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

## Claims

1. A display apparatus, comprising:
a waveguide and a collimating optics positioned at a first side of the display apparatus, the waveguide the collimating optics are connected;
an image source and a collimating optics module arranged at a second side of the display apparatus, the second side of the display apparatus being different from the first side of the display apparatus; and
a coherent fiber bundle (CFB) positioned between and coupled to (i) the waveguide and the collimating optics and (ii) the image source and the collimating optics module.

2. The display apparatus of claim **1,** wherein:
the first side of the display apparatus is a front side of the display apparatus, and
the second side of the display apparatus is a backside of the display apparatus.

3. The display apparatus of claim 1 or 2, wherein the second side of the display apparatus is one of a topside, a left side, and a right side of the display apparatus.

4. The display apparatus of any one of the preceding claims, wherein the CFB includes a tapered first end coupled to (i) the waveguide and the collimating optics, and a second end coupled to (ii) the image source and the collimating optics module.

5. The display apparatus of any one of the preceding claims, wherein the waveguide and the collimating optics are separate components coupled together.

6. The display apparatus of any one of the preceding claims, wherein the waveguide and the collimating optics are integrated into a single component.

7. The display apparatus of any one of the preceding claims, wherein the collimating optics module and the image source are separate components coupled together.

8. The display apparatus of any one of the preceding claims, wherein the collimating optics module and the image source are integrated into a single component.

9. The display apparatus of any one of the preceding claims, wherein:
the CFB is a dual CFB which includes a first sub-CFB and a second sub-CFB, and
each of the first sub-CFB and the second sub-CFB in the dual CFB are coupled to a respective sub-image source of the image source and a respective sub-waveguide of the waveguide.

10. The display apparatus of any one of the preceding claims, wherein the CFB is rigid, flexible, flat, formed, or a combination thereof.

11. The display apparatus of any one of the preceding claims, wherein the image source is a digital light processing (DLP) projector.

12. The display apparatus of any one of the preceding claims, wherein:
the CFB includes a plurality of fibers, and
a fiber size of each of the plurality of fibers in the CFB is less than 10 micrometers.

13. The display apparatus of any one of the preceding claims, wherein:
the CFB includes a plurality of fibers, and
a fiber size of each of the plurality of fibers in the CFB is one of 4 micrometers or 1 micrometer.

14. A method of operating a display apparatus, the method comprising:
generating light rays indicating an initial image via an image source of the display apparatus;
receiving the light rays emitting from each pixel of the image source and collimating the light rays into parallel rays via a collimating optics module of the display apparatus, the collimating optics module being coupled to the image source;
receiving the collimated light rays and transmitting the collimated light rays toward a collimating optics via a coherent fiber bundle (CFB) of the display apparatus, the CFB being arranged between the collimating optics module and the collimating optics, and electrically coupled to the collimating optics module and the collimating optics;
receiving the collimated light rays and transmitting the collimated light rays into a waveguide via the collimating optics, the collimating optics being coupled to the waveguide; and
transmitting the collimated light rays toward an eyepiece optics to display an image via the eyepiece optics based on the collimated light rays.

15. The method of claim 14, wherein:
the waveguide and the collimating optics are positioned at a first side of the display apparatus, and
the image source and the collimating optics module are arranged at a second side of the display apparatus that is different from the first side of the display apparatus.

16. The method of claim 15, wherein:
the first side of the display apparatus is a front side of the display apparatus, and
the second side of the display apparatus is a backside of the display apparatus.

17. The method of claim 15 or 16, wherein the second side of the display apparatus is one of a topside, a left side, and a right side of the display apparatus.

18. The method of any one of the preceding claims 14 to 17, wherein the CFB includes a tapered first end coupled to (i) the waveguide and the collimating optics, and a second end coupled to (ii) the image source and the collimating optics module.

19. The method of any one of the preceding claims 14 to 18, wherein:
the CFB includes a plurality of fibers, and
a fiber size of each of the plurality of fibers in the CFB is less than 10 micrometers.

20. The method of any one of the preceding claims 14 to 19, wherein:
the CFB includes a plurality of fibers, and
a fiber size of each of the plurality of fibers in the CFB is one of 4 micrometers and 1 micrometer.
